# EUROPÄISCHE PATENTSCHRIFT

(11) **EP 1 118 801 B1**
(45) Veröffentlichungstag und Bekanntmachung des Hinweises auf die Patenterteilung: **26.10.2005**
(21) Anmeldenummer: 00125335.0
(22) Anmeldetag: 30.11.2000
(51) Int. Cl.: F16H 61/02

(54) **Verfahren zur Optimierung des Getriebemanagementes in einem Antriebsstrang für Fahrzeuge**
Method for optimizing the driveline management of vehicles
Méthode d'optimisation de la gestion de la chaîne cinématique de véhicules

(30) Priorität: 21.01.2000 DE 10002665
(43) Veröffentlichungstag der Anmeldung: 25.07.2001
(73) Patentinhaber: Voith Turbo GmbH & Co. KG, 89522 Heidenheim (DE)
(72) Erfinder: Müller, Robert, Dr., 89407 Dillingen (DE); Hendrickx, Hub, 7391 MT Twello (NL); Nijhof, Tonnie, 7321 LE Apeldoorn (NL)
(74) Vertreter: Dr. Weitzel & Partner

(56) Entgegenhaltungen:
- WO-A-97/05408
- US-A- 5 089 963
- US-A- 5 483 446

## Beschreibung

Die Erfindung betrifft ein Verfahren zur Optimierung des Getriebemanagementes in einem Antriebsstrang für Fahrzeuge, im einzelnen mit den Merkmalen aus dem Oberbegriff des Anspruchs 1.

Aus der US 5483 446 A ist ein gattungsbildendes Verfahren bekannt, wobei ein Schaltprogramm über eine Frequenzanalyse der Fahrparametern ausgewählt wird.

Zur Optimierung des Motor-Getriebemanagementes in einem Antriebstrang für Fahrzeuge sind eine Vielzahl von Verfahren bekannt. Stellvertretend wird auf ein kundenorientiertes Betriebsdatenerfassungssystem der Firma Voith verwiesen, bei welchem über einen bestimmten Referenzzeitraum Betriebsdaten jeweils zu den in diesem Zeitraum vom Fahrer per Gaspedal vorgebbaren Laststufe bzw. Lastgeberstufen sowie die Zeitanteile für die einzelnen eingelegten Gangstufen erfaßt werden. Beide Informationen werden getrennt erfaßt, d.h. unabhängig voneinander. Aus den sich daraus ergebenden Informationen, insbesondere den Zeitanteilen der einzelnen Gangstufen über den Referenzzeitraum, das heißt die Summe der Einzelzeiten der Einlegung einer bestimmten Gangstufe, wird vom Kundendienst oder dem Servicepersonal nach Auslesen dieser Daten aus einer der Getriebebaueinheit zugeordneten Steuervorrichtung oder einer anderen, im Fahrzeug vorgesehenen Steuervorrichtung, welche mit der Steuervorrichtung der Getriebebaueinheit gekoppelt ist, eine Aussage darüber getroffen werden, ob für den konkret vorliegenden Antriebsstrang die Achsübersetzung richtig gewählt ist oder nicht beziehungsweise ob der Kraftstoffverbrauch auf ein optimales Übertragungsverhalten hindeutet. Je nach Ergebnis wird von der Person, welche die Auswertung vornimmt, eine Entscheidung darüber getroffen, in welcher Richtung eine Veränderung der Achsübersetzung erforderlich ist und wie sich die Zeitanteile hinsichtlich der einzelnen Gangstufen in diesem Fall verschieben. So wird beispielsweise bei Erkennen einer geringen Ausnutzung eines höheren Ganges durch das Service-Personal über einen Referenzzeitraum dieses eine höhere Achsübersetzung vorschlagen, um den Zeitanteil für diesen im Referenzzeitraum wenig genutzten höheren Gang zu erhöhen.

Ein wesentlicher Nachteil einer derartigen Auswertung besteht darin, daß die Möglichkeiten im Rahmens des das Motor-Getriebemanagement charakterisierenden Schaltverfahrens keine Berücksichtigung finden. Des weiteren kann der Kraftstoffverbrauch für eine Gangstufe unter Berücksichtigung der Lastgeberstufen nur für den gesamten Drehzahlbereich der Gangstufe ermittelt werden, so daß bei großen Drehzahlbereichen lediglich nur ein ungenauer Mittelwert zur Verfügung steht, der wenig aussagekräftig ist. Auch ist es nicht möglich, eine Aussage bezüglich der Auswahl der Schaltpunkte im Zusammenhang mit dem Kraftstoffverbrauch zu treffen. Der Erfindung liegt daher die Aufgabe zugrunde, ein Verfahren zur Optimierung des Getriebemanagementes und damit auch des Motor- und Getriebemanagementes zu entwickeln, welches eine differenziertere Aussage bezüglich der Eignung des vorliegenden Antriebsstranges und einer Erhöhung der Qualität der Kraftstoffverbrauchsberechnung durch Mitteilung des Kraftstoffverbrauches nicht mehr über den gesamten Drehzahlbereich eines Ganges, sondern über Teilabschnitte erlaubt, wobei aus diesen Aussagen eine Empfehlung bezüglich der Gestaltung des Motor-Getriebemanagementes bildbar ist. Des weiteren soll die Möglichkeit einer Optimierung des Kraftstoffverbrauches immer im Zusammenhang mit der Gewährleistung einer ausreichenden Fahrfähigkeit einhergehen.

Die erfindungsgemäße Lösung ist durch die Merkmale des Anspruchs 1 charakterisiert. Vorteilhafte Ausgestaltungen sind in den Unteransprüchen wiedergegeben.

Im nachfolgenden Text verwendete Bezeichnungen sind wie folgt erklärt:
a) Referenzzeit - fest vordefinierter bzw. vorgegebener oder frei wählbarer Beurteilungszeitraum
   Dieser kann dabei einer Gesamtnutzungsdauer entsprechen, welche
   a1) durch die Summe der einzelnen Zeitintervalle des Betriebes des Fahrzeuges beschreibbar ist oder
   a2) durch ein Zeitintervall unabhängig vom Betrieb des Fahrzeuges charakterisierbars ein, d.h. auch Sillstandszeiten umfaßt.
b) Referenzstrecke - fest vordefinierte bzw. vorgegebene oder frei wählbare Beurteilungsgesamtstrecke
c) Zeitanteil - Dauer eines Zustandes bezogen auf einen bestimmten Betriebsbereich
   c1) Zeitanteil je Gangstufe - Verweildauer in einer Gangstufe bzw. Gesamtnutzungsdauer einer Gangstufe in einem Referenzzeitraum oder über einen Referenzzeitraum
   c2) Zeitanteil der Laststufe - Gesamtnutzungsdauer einer Laststufe über einen Referenzzeitraum oder eine Referenzstrecke
d) Geschwindigkeitsbereich - Fahrgeschwindigkeitsbereich bestimmter Größe in einer Gangstufe
e) Geschwindigkeitskollektiv - Verteilung der Häufigkeit der einzelnen Geschwindigkeitsbereiche in den Zeitanteilen der Gangstufen

Das Verfahren zur Optimierung des Getriebemanagements und damit eines Antriebsmaschinen-Getriebemanagementes in einem Antriebsstrang für Fahrzeuge, umfassend eine Antriebsmaschine und eine Getriebebaueinheit beim Wechsel zwischen wenigstens zwei Gangstufen vorzugsweise für einen überwiegend genutzten Anwendungsbereich, bei welchem der Gangstufenwechsel durch ein Verfahren zur Realisierung der Ansteuerung der einzelnen Betätigungselemente, insbesondere Schaltelemente der Getriebebaueienheit charakterisiert ist, wird erfindungsgemäß dahingehend modifiziert, daß neben der Erfassung der Zeitanteile für die einzelnen Gangstufen eine Zuordnung der Zeitanteile einer jeden Gangstufe zu einzelnen Geschwindigkeitsbereichen erfolgt und des weiteren die Häufigkeitsverteilung der Geschwindigkeitsbereiche im Zeitanteil der jeweiligen Gangstufe gebildet wird. Dazu werden wenigstens die, die Zeitanteile für die einzelnen Gangstufen wenigstens mittelbar charakterisierenden Größen erfaßt und desweiteren die für die Charakterisierung der Geschwindigkeitsbereiche in den Zeitanteilen erforderlichen Größen. Die Erfassung erfolgt dabei im Rahmen der Betriebsdatenerfassung und bei Berücksichtigung weiterer die Fahrzeugkonfiguration beschreibender Größen beispielsweise aus der Fahrzeugsteuerung. Vorzugsweise werden die, die Zeitanteile in den Gangstufen und die für die Charakterisierung der Geschwindigkeitsbereiche erforderlichen Größen direkt erfaßt. Es besteht jedoch auch die Möglichkeit, diese durch Berechnung oder anderweitige Ableitung aus anderen erfaßtem Betriebsdaten zu ermitteln.

Aus der Häufigkeitsverteilung der Geschwindigkeitsbereiche in den Zeitanteilen einer Gangstufe wird ein Geschwindigkeitskollektiv ermittelt. In einem weiteren Verfahrensschritt wird das sich ergebende Geschwindigkeitskollektiv hinsichtlich des Kraftstoffverbrauches ausgewertet. Dazu erfolgt zuerst eine Übertragung des Geschwindigkeitskollektives und der damit verbundenen Auswirkungen auf die Motordrehzahl, d.h. Ermittlung der den einzelnen Geschwindigkeitsbereichen zugeordneten Antriebsmaschinendrehzahlen und die Erstellung einer Häufigkeitsmatrix für die einzelnen Motordrehzahlen in den entsprechenden Gangstufen, d.h. eine Antriebsmaschinendrehzahlverteilung. Durch die Multiplikation mit den Zeitanteilen der einzelnen Geschwindigkeitsbereiche in den einzelnen Gangstufen kann der jeweils spezifische Verbrauch der dabei betrachteten Drehmoment-/Drehzahlbereiche ermittelt werden und damit der Kraftstoffverbrauch in der zu betrachtenden Gangstufe. Wird ersichtlich, daß die Geschwindigkeitsbereiche, welche durch hohen Kraftstoffverbrauch charakterisiert sind, einer anderen Gangstufe zugeordnet werden sollten, wird eine Empfehlung zur Änderung des Schaltverfahrens gegeben und gegebenfalls ein geeigneteres Schaltprogramm gewählt. Ähnliches gilt auch, wenn die Auswertung auf eine nicht ausreichende Fahrdynamik hindeutet, d. h. Schaltungen bereits bei zu niedriger Drehzahl erfolgen. In diesem Fall kann eine Prioritätsvorgabe für das zu erreichende Ziel - niedriger Kraftstoffverbrauch oder ausreichende Fahrdynamik erfolgen, wobei die Gewährleistung einer ausreichenden Fahrdynamik immer unter dem Gesichtspunkt optimaler Kraftstoffverbrauch erfolgen sollte bzw. anzuheben ist.

Die erfindungsgemäße Lösung ist für Antriebsstränge mit Getriebebaueinheiten und Eignung zur Nutzung unterschiedlicher Schaltverfahren anwendbar. Dabei sind wenigstens zwei Verfahren zur Realisierung der Ansteuerung der Betätigungselemente theoretisch vorsehbar, wobei beide in der Steuervorrichtung der Getriebebaueinheit oder einer, dieser übergeordneten Steuervorrichtung hinterlegt sein können oder aber lediglich eines in der Steuervorrichtung der Getriebebaueinheit oder einer dieser übergeordneten Steuervorrichtung hinterlegt ist, während das oder die anderen extern zuladbar ist

Die Betriebsdatenerfassung erfolgt vorzugsweise über die der Getriebebaueinheit zugeordnete Steuervorrichtung. Denkbar ist jedoch auch eine Erfassung in einer, der Steuervorrichtung der Getriebebaueinheit übergeordneten Steuervorrichtung und der Kommunikation der beiden Steuervorrichtungen über eine elektrische Kopplung oder ein Datenkommunikationsnetzwerk. Bei den Schaltprogrammen kann es sich dabei um
a) Schaltprogramme mit festen Umschaltpunkten oder vorzugsweise
b) Schaltprogramme mit variablen Schaltpunkten, d.h., zum Beispiel ein beschleunigungsabhängiges Schaltprogramm
handeln.

Die beschleunigungsabhängigen Schaltprogramme können des weiteren hinsichtlich der gewünschten Anforderungen an das Fahrzeug leistungsorientiert oder verbrauchsoptimiert gestaltet werden. Das Grundprinzip der beschleunigungsabhängigen Schaltung besteht darin, daß je nach Erfordernis beziehungsweise Fahrwiderstand sowie als Funktion der tatsächlichen Beschleunigung bei kleineren oder größeren Antriebsbeziehungsweise Motordrehzahlen geschaltet wird, je nachdem ob niedriger Kraftstoffverbrauch oder eine ausreichende Beschleunigung zu bevorzugen ist. Für den Schaltvorgang selbst ist die momentane Beschleunigung des Fahrzeuges beziehungsweise dessen Verzögerung maßgebend. Dabei werden immer die zwei folgenden Grenzfahrzustände beziehungsweise Beschleunigungen berücksichtigt:
1. geringe Fahrzeugbelegung in ebenem oder abschüssigem Gelände = hohe Fahrzeugbeschleunigung, und
2. hohe Fahrzeugbelegung bei ansteigendem Gelände = geringe Fahrzeugbeschleunigung.

Dabei ergibt sich im erstgenannten Fall eine hohe Fahrzeugbeschleunigung bei niedrigen Antriebsdrehzahlen. Eine Hochschaltung der Gänge kann daher bereits vorzeitig bei relativ niedriger Motordrehzahl erfolgen, was zu einer Senkung des Kraftstoffverbrauches führt. Aus dem gleichen Grund erfolgt auch die Rückschaltung der Gänge bei kleinerer Verzögerung mit niedriger Motordrehzahl. Im zweiten Fall ist eine größere Antriebsleistung erforderlich, weshalb die Hochschaltung erst bei relativ großen Motordrehzahlen erfolgt. In Abhängigkeit von der gemessenen Fahrzeugbeschleunigung beziehungsweise Verzögerung erfolgt die Hoch- oder Rückschaltung der Gänge jeweils zwischen diesen beiden Fahrzuständen gleitend, das heißt in einem sogenannten Schalt-Drehzahlbereich. Der Schalt-Drehzahlbereich selbst ist außerdem von der Laststufe abhängig. Bei größerer Last wird demzufolge auch bei höherer Drehzahl geschaltet. Der sich daraus ergebende Beschleunigungs-/Abtriebsdrehzahl-Kennlinienverlauf weist im Beschleunigungs-/Abtriebsdrehzahl-Diagramm einen gestuften Verlauf auf. Dieser gestufte Verlauf wird dabei durch die beiden Grenzzusstände geringer Fahrzeugbelegung in ebenem oder abschüssigem Gelände und hohe Fahrzeugbelegung bei ansteigendem Gelände gebildet. Dabei besteht unter einem weiteren Aspekt der Erfindung die Möglichkeit, das Verfahren zur Realisierung der Ansteuerung der Betätigungselemente und damit die Schaltkennlinie eines beschleunigungsabhängigen Schaltprogrammes bei unterschiedlichen Achsübersetzungen wie bereits bekannt, derart festzulegen, daß mit ein- und demselben Schaltprogramm der Kraftstoffverbrauch optimiert werden kann. Dazu ist es vorgesehen, daß die Beschleunigungs-Abtriebsdrehzahl-Kennlinie, die dem Schaltprogramm zugrunde gelegt wird, auf die Schalthäufigkeit des Hinterachsgetriebes mit der kleinsten Achsübersetzung abgestimmt ist. Das Fahrzeug mit der kleinsten Achsübersetzung ist dann für den vorgesehenen Einsatz optimiert, da im Bereich hoher Beschleunigungen schon bei niedrigen Motordrehzahlen und im Bereich niedriger Beschleunigungen bei höheren Drehzahlen geschaltet wird. Bei Fahrzeugen mit einer Achse größerer Übersetzung liegen die Schaltpunkte im wesentlichen bei höheren Beschleunigungen als bei dem Fahrzeug mit der kleinsten Achsübersetzung. Damit schaltet das Fahrzeug tendentiell bei niedrigeren Motordrehzahlen, was sich wiederum vorteilhaft auf den Kraftstoffverbrauch auswirkt. Dem gemäß kann ein- und dieselbe SchaltKennlinie für unterschiedliche Hinterachsübersetzungen verwendet werden. Die Schalt-Kennlinien, die dem beschleunigungsabhängigen Schaltprogramm zugrunde gelegt werden, sind dazu dem jeweiligen Fahrzeugeinsatzgebiet angepaßt. Dazu werden die Schaltpunkte jeweils in einen Speicher eingelesen und dort über eine gewisse Anzahl von Schaltpunkten ein Mittelwert gebildet, welcher die Lage der Kennlinie bestimmt. Auf diese Art und Weise ist es möglich, eine Kraftstoffoptimierung trotz unterschiedlicher Einsatzbedingungen zu erreichen, wobei das Unterschreiten einer gewissen Mindest-Antriebsdrehzahl, die zu einer Komfortbeeinträchtigung führen würde, vermieden wird.

Zur Berücksichtigung der Schaltdrehzahlen bei Schaltverfahren mit variablen Schaltpunkten wird eine Mittelwertbildung aus den einzelnen erfaßten Schaltdrehzahlen vorgenommen.

Die Vorgabe der Änderung des Verfahrens zur Ansteuerung der einzelnen Betätigungselemente der Getriebebaueinheit und damit des Schaltprogrammes und/oder die Aktivierung dessen kann dabei entweder
a) extern nach Auslesen der entsprechenden Betriebsdaten aus der Steuervorrichtung der Getriebebaueinheit oder einer dieser zugeordneten oder übergeordneten Steuervorrichtung und externer Auswertung durch das Service-Personal oder andere berechtigte Personen erfolgen oder
b) nach Auswertung der Betriebsdaten in der der Getriebeeinheit zugeordneten Steuervorrichtung extern nach Auslesen des Auswertergebnisses durch das Service-Personal oder andere berechtigte Personen
c) automatisch in der Steuervorrichtung der Getriebebaueinheit während des Betriebes.

Im wesentlichen können beide Anwendungsfälle gleichberechtigt betrachtet werden. Vorzugsweise wird der erstgenannte Fall zum Einsatz gelangen, da die Differenzzeiträume in der Regel sehr groß gewählt werden, so daß diese auch mit den in der Regel erforderlichen Überwachungen und Kundendienst-Inanspruchnahmen übereinstimmen.

Als Betriebsdaten können im wesentlichen die nachfolgend genannten fortlaufend oder in bestimmten zeitlich vergegebenen Intervallen direkt/ oder indirekt ermittelt werden:
- Betätigung der einzelnen Schaltelemente in den einzelnen Gangstufen
- Erfassung der Zeiten der Betätigung der Schaltelemente und Verweildauer in der jeweiligen Gangstufe
- Erfassung der Schaltpunkte, im einzelnen der Schaltdrehzahlen
- Ermittlung der einzelnen Drehzahlen der Antriebsmaschine und/oder des Abtriebes
- Ermittlung kollektiv der Lastgeberstufen der Antriebsmaschine, insbesondere der Verberennungskraftmaschine und
- gegebenenfalls, falls nicht aus der Fahrzeugkonfiguration eindeutig bekannt, das gewählte oder standardmäßig genutzte Schaltprogramm.

Wesentlich und damit zwingend erforderlich ist jedoch die Ermittlung der Betriebsdaten zur Beschreibung der Zeitanteile in ein von den Gangstufen, des Kollektives der Lastgeberstufen der Antriebsmaschine und der Schaltdrehzahlen. Die direkete Erfassung bedeutet, daß mittels geeigneter Erfassungsmitteln die entsprechenden Betriebsdaten erfaßt und zur Steuervorrichtung weitergeleitet werden. Indirekte Erfassung bedeutet, daß die, die genannten Betriebsdaten wenigstens mittelbar charakterisierenden Größen erfaßt werden und aus diesen die Betriebsdaten abgeleitet, beispielsweise rechnerisch ermittelt werden.

Weitere Größen, die zur Beurteilung erforderlich sind und die nicht als Betriebsdaten gespeichert werden, sondern bereits über die Fahrzeugkonfiguration bekannt sind, sind:
- die aktuelle Achsübersetzung Achs
- ggf. das gewählte beziehungsweise vorgegebene ist - Schaltprogramm Sᵥ, welches als Standardschaltprogramm im Antriebsstrang vorsehen sein kann und
- die eine Gangstufe wenigstens mittelbar charakterisierenden Größen In einer weiteren Ausführungsform des erfindungsgemäßen Verfahrens werden zur Zuordnung der Zeitanteile in den Gangstufen zu Bereichen der Geschwindigkeiten bei nicht detaillierter Erfassung aller dafür erforderlichen Betriebsdaten die Zeitanteile für die eingelegten Lastgeberstufen, die Ist-Achsübersetzung und das gewählte Schaltprogramm sowie die Schaltpunkte beziehungsweise die diese charakterisierenden Größen ermittelt. Die Aufsplittung der Zeitanteile in den oberen Gängen erfolgt dabei in Geschwindigkeitsklassen einer bestimmten Klassenbreite, welche vordefiniert oder bestimmt sein kann. Beispielsweise wird eine Klassenbreite von 5 bis 10 km pro Stunde gewählt. Als Hilfsmittel werden dabei die Zeitanteile des Einlegens der Wandlerbremseinrichtung über der Abtriebsdrehzahl erfaßt. Dazu werden die Geschwindigkeiten, bei welchen eine Einlegung der Wandlerbremse erfolgt, erfaßt. Diese Erfassung kann in Form der Ermittlung diskreter Geschwindigkeitswerte oder ebenfalls in Klassen erfolgen. In einem weiteren Schritt werden die restlichen Zeitanteile in den jeweiligen Gangstufen auf Basis einer aus der mittleren Geschwindigkeit resultierenden statistischen Geschwindigkeitsverteilung aufgesplittet. Dazu erforderlich ist die Bestimmung der mittleren Geschwindigkeit, woraus die Bestimmungen eines Verteilungsparameters bzw. mehrer Parameter der Geschwindigkeitsverteilung ableitbar sind.

Die statistische Geschwindigkeitsverteilung charakterisiert dabei in der Regel einen Hauptanwendungsbereich für das Betreiben des Fahrzeuges. Als diese werden dabei beispielsweise die nachfolgend genannten bezeichnet, wobei diese Zuordnung nicht zwingend ist und andere ebenfalls möglich sind:
1. Fahren mit geringer Geschwindigkeit und/oder häufigem Stop- and Go-Verkehr unter hauptsächlicher Ausnutzung der unteren Gangstufen = Betriebszyklus "Stadtverkehr".
2. Fahren mit höherer Geschwindigkeit unter hauptsächlicher Ausnutzung der höheren Gangstufen = Betriebszyklus "Überlandverkehr"
3. Misch-Betrieb - im wesentlichen gleichmäßige Ausnutzung beider Anwendungsbereiche.

Der erste Betriebsbereich charakterisiert dabei im wesentlichen das Fahren in der Stadt und die damit verbundenen Anforderungen, während der zweite Betriebsbereich im wesentlichen das Verhalten bei Überlandfahrten beschreibt. Der dritte Betriebsbereich bildet dabei eine Mischung aus den beiden vorgenannten, wobei in diesem Fall keine eindeutige Zuordnung hinsichtlich der Gewichtung der Nutzung der einzelnen Gangstufen zu einem der vorgenannten Betriebszyklen erfolgt.

Die erfindungsgemäße Lösung dient der Auswahl des geeigneten Schaltprogrammes für einen konkreten Einsatzfall. Bezüglich der konkreten Ausgestaltung der Schaltprogramme, insbesondere beschleunigungsabhängig oder beschleunigungsabhängig leistungsorientiert oder beschleunigungsabhängig verbrauchsorientiert bestehen keine Beschränkungen. Die konkrete Auswahl erfolgt jeweils gemäß den Erfordernissen des Einsatzfalles.

Die erfindungsgemäße Lösung wird nachfolgend anhand von Figuren erläutert. Darin ist im einzelnen folgendes dargestellt:
- Fig. 1a und Fig. 1b: verdeutlichen anhand eines Blockschaltbildes und eines Flußdiagrammes das Grundprinzip des erfindungsgemäßen Verfahrens;
- Figur 2: verdeutlicht in schematisch vereinfachter Darstellung anhand eines Blockschaltbildes eine Möglichkeit der externen, d.h. außerhalb des Fahrzeuges erfolgenden Durchführung des erfindungsgemäßen Verfahrens;
- Figur 3: verdeutlicht anhand eines Flußdiagrammes konkret ein Verfahren zur Auswertung der Betriebsdaten.

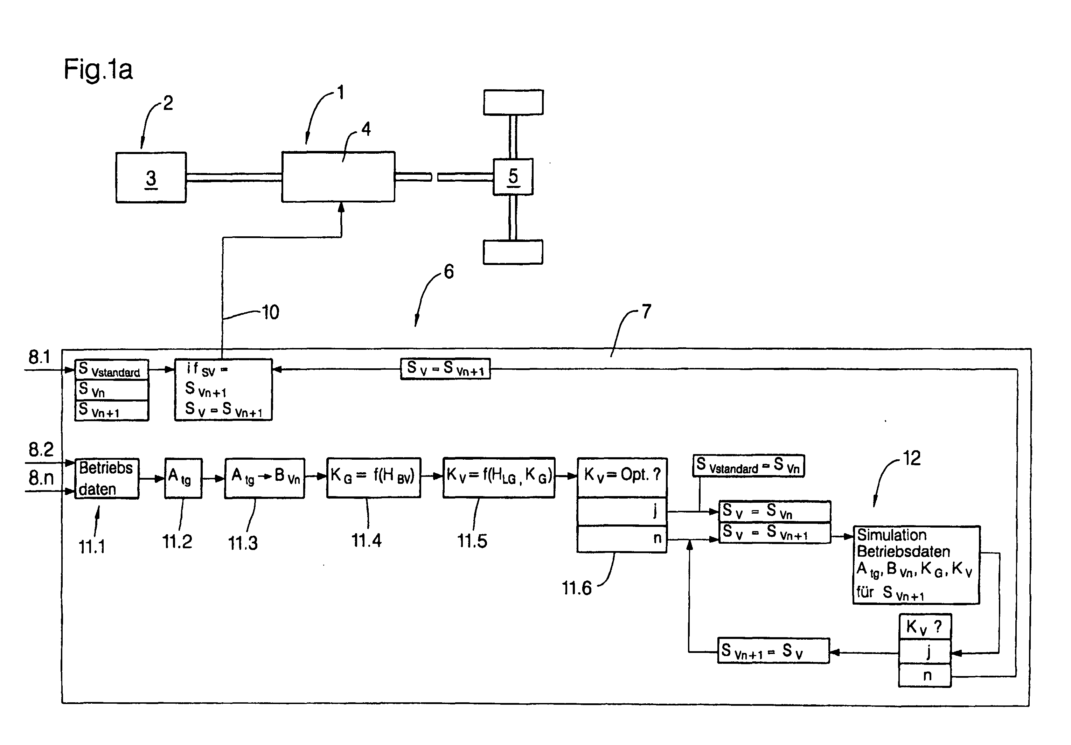

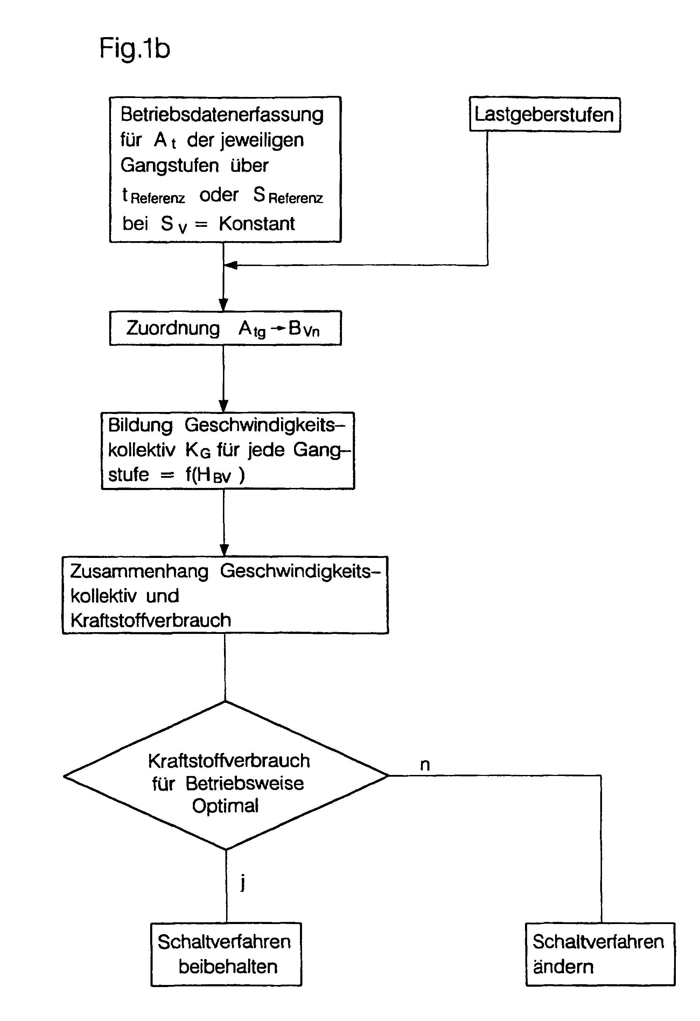

Die Figuren 1a und 1b verdeutlichen in schematisch vereinfachter Darstellung anhand eines Blockschaltbildes und eines Flußdiagrammes das Grundprinzip des erfindungsgemäßen Verfahrens zur Optimierung eines Antriebsmaschine-Getriebemanagementes in einem Antriebsstrang für Fahrzeuge. Gemäß Figur 1a umfaßt der Antriebsstrang 1 mindestens eine Antriebsmaschine 2, welche beispielsweise als Verbrennungskraftmaschine 3 ausgeführt ist, eine Getriebebaueinheit 4 und eine Achsgetriebebaueinheit 5, welche in Kraftflußrichtung von der Antriebsmaschine 2 zur Getriebebaueinheit 4 dieser nachgeschaltet ist und das an der Getriebeausgangswelle anliegende Drehmoment bzw. die dort abnehmbare Drehzahl entsprechend der Übersetzung wandelt. Der Getriebebaueinheit 4 ist eine Steuervorrichtung 6, umfassend eine Steuereinrichtung zugeordnet. Die Steuervorrichtung 6 kann dabei, hier nicht dargestellt, entweder als autarke, nur der Getriebebaueinheit 4 zugeordnete Steuervorrichtung oder Bestandteil einer neben- oder übergeordneten Steuervorrichtung, beispielsweise der Fahrsteuerung sein, oder mit einer neben- oder übergeordneten Fahrsteuerung gekoppelt oder über ein Datenkommunikationsnetzwerk mit anderen Antriebskomponenten beziehungsweise den diesen zugeordneten Steuervorrichtungen verbunden werden. Die Ausführung der Steuervorrichtung und Zuordnung beziehungsweise Einordnung hinsichtlich der Priorität gegenüber anderen Steuervorrichtungen hängt dabei konkret vom Einsatzfall ab.

Über die Steuervorrichtung 6 erfolgt die Ansteuerung der Betätigungseinrichtungen einzelner Schaltelemente der Getriebebaueinheit 4 zur Realisierung des Wechsels von einer, die Betriebsweise der Getriebebaueinheit 4 charakterisierenden Ausgangsgangstufe in eine Zielgangsstufe entsprechend den Erfordernissen des Anwendungsfalles. Die einzelnen Gangstufen bestimmen dabei die Ausnutzung bestimmter Drehzahlbereiche der Antriebsmaschine bezogen auf den Gesamtarbeitsbereich der Antriebsmaschine. Die Ansteuerung erfolgt dabei im allgemeinen mittels vorgegebener Schaltprogramme, welche ein Verfahren zur Steuerung der einzelnen Getriebeelemente der Getriebebaueinheit 4 hinsichtlich bestimmter Zielkriterien und unter Berücksichtigung der vorliegenden Randbedingungen beschreiben. Die Erfindung bezieht sich dabei auf Ausführungen mit Eignung für mindestens zwei vorgegebbare, d.h. theoretisch möglich nutzbare Schaltprogrammen, wobei diee Programme nicht unbedingt in der Steuerung hinterlegt sein müssen, sondern nach Bedarf die Möglichkeit des Ausladens oder des Ladens für die Steuervorrichtung besteht. Der Begriff Schaltprogramm ist dabei derart zu verstehen, daß bei Erfassung der den aktuellen Betriebszustand des Fahrzeuges wenigstens mittelbar charakterisierenden Größen und des Fahrerwunsches in Abhängigkeit dessen die Umschaltpunkte vordefiniert oder berechenbar sind. Jedes Schaltprogramm ist dabei durch sogenannte Schaltkennlinien beschreibbar, welche den Übergang zwischen zwei aufeinanderfolgenden Gangstufen - einer Ausgangsgangstufe und einer Zielgangsstufe - bestimmen. Dabei können die Umschaltpunkte zwischen den einzelnen Gangstufen, d.h. die Schaltdrehzahlen, fest vorgegeben oder vorzugsweise frei einstellbar sein, beispielsweise entsprechend des Einsatzfalles. Die Steuereinrichtung weist dazu mindestens einen Eingang 8 auf, über welchen die dem Betriebszustand des Fahrzeuges wenigstens mittelbar charakterisierenden Größen der Steuervorrichtung 6 zuführbar sind. Dabei kann bei serieller Datenübertragung bereits ein Eingang 8 ausreichend sein, während bei paralleler Datenübertragung entsprechend der Anzahl der zur Auswertung des Ist-Zustandes der Betriebsweise des Antriebsstranges 1 eine bestimmte Anzahl an Eingängen 8.1-8.n vorzusehen wäre. Entsprechend den Ist-Werten und einem bestimmten Fahrerwunsch nach Beschleunigung oder Verzögerung beziehungsweise einem bestimmten Fahrverhalten, welcher entweder ebenfalls am Eingang 8 bei serieller Datenübertragung oder als Signal an einem weiteren Eingang 8.n der Steuereinrichtung 7 zuführbar ist, erfolgt die Ansteuerung der einzelnen Elemente der Getriebebaueinheit 4 entsprechend eines bestimmten Schaltprogrammes. Dieses ist vorzugsweise in einer Auswerteinrichtung 9 der Steuereinrichtung 6 hinterlegt. In der Auswerteinrichtung 9 werden dabei die Eingangsgrößen, insbesondere die an den Eingängen 8.1-8.n anliegenden, den aktuellen Ist-Zustand der Betriebsweise des Fahrzeuges wenigstens mittelbar beschreibenden Größen und die den Fahrerwunsch nach einem bestimmten Fahrverhalten wenigstens mittelbar beschreibenden Größen ausgewertet und entsprechend des aktuell gewählten Schaltprogrammes die einzelnen Elemente der Getriebebaueinheit 4 durch Ausgabe der entsprechenden Stellgrößen am Ausgang 10 beziehungsweise einer Mehrzahl von Ausgängen 10.1 bis 10. n angesteuert.

Erfindungsgemäß wird dabei die Betriebsweise der Getriebebaueinheit 4 und damit die Ausnutzung der einzelnen Gangstufen GS über den Gesamt-Betriebsbereich der Antriebsmaschine 2 über einen Referenz-Zeitraum t_{referenz} und/oder eine Referenz-Gesamtstrecke s_{referenz} an gefahrenen Kilometern ermittelt. Als Referenzzeit t_{referenz} kann dabei eine bestimmte Gesamtbetriebsdauer des Fahrzeuges angesehen werden, welche beispielsweise einem Nutzungsintervall entspricht, das den Zeitraum zwischen zwei Durchsichten bzw. Kundendienstchecks beschreibt, während als Referenzstrecke s_{referenz} eine bestimmte vordefinierbare Nutzungs-Gesamtstrecke bezeichnet wird.

Die Figur 1b verdeutlicht anhand eines Flußdiagrammes die Vorgehensweise bezüglich der Optimierung des Antriebsmaschinen-Getriebemanagementes. Dieses umfaßt im ersten Schritt die Betriebsdatenerfassung. Zu diesen Betriebsdaten gehören dabei die einzelnen Lastgeberstufen, und die die Verweildauer in einer Gangstufe wenigstens mittelbar charakterisierenden Größen. Gegebenenfalls kann das theoretisch verwendete Ist-Schaltprogramm, welches in der Regel als ein Standardschaltprogramm S_{Vstandard} definiert ist, auch über die Betriebsdatenerfassung anhand der Betriebsdaten wenigstens mittelbar charakterisiert werden, so daß anhand der Betriebsdaten eine eindeutige Zuordnung zu einem bestimmten Schaltprogramm möglich ist. Insbesondere bei Antriebssträngen, für welche eine Vielzahl von Schaltprogrammen zur Verfügung stehen ist eine eindeutige Zuordnung über die Betriebsdatenerfassung leicht realisierbar. Ansonsten ist das Schaltverfahren bereits aus der Fahrzeugkonfiguration bekannt. Insbesondere bei Antriebssträngen, bei welchen lediglich ein Standardschaltprogramm vorgesehen ist, kann die Kennzeichnung des Schaltprogrammes S_{VStandard} bereits auf einfache Art und Weise der Fahrzeugkonfiguration entnommen werden. Ebenfalls aus der Fahrzeugkonfiguration bekannt sind die aktuelle Ist-Achsübersetzung i_{Achs} und die eine Gangstufe wenigstens mittelbar charakterisierenden Größen, beispeilsweise Übersetzung i. Vorzugsweise werden die die Gangstufe unmittelbar charakterisierenden Größen, beispielsweise die Betätigung der Schaltelemente oder die Schaltdrehzahlen, und die die Verweildauer in einer Gangstufe unmittelbar charakterisierende Größe in Form der Zeit t erfaßt. Dabei wird in einem ersten Schritt der Zeitanteil A_{tg} einer Gangstufe im Bezug auf die Gesamtbetriebsdauer t_{referenz} beziehungsweise die Gesamt-Nutzungsstrecke s_{referenz} ermittelt. Für die weitere Auswertung werden die Lastgeberstellungen LG in den Zeitanteilen A_{tg} erfaßt. Bereits hier ist eine Grundbeurteilung über die Eignung des Schaltprogrammes möglich. Jedoch besteht keine Möglichkeit der Ableitung einer Vorgehensweise. Daher werden in einem weiteren zweiten Verfahrensschritt die Zeitanteile der Gangstufen A_{tg} aufgesplittet, indem diese Geschwindigkeitsbereichen Bᵥ zugeordnet werden. Aus dieser Zuordnung wird ein Geschwindigkeitskollektiv KG in Abhängigkeit der Häufigkeit des Auftretens der Geschwindigkeitsbereiche gebildet, welches eine Aussage über den Anteil des Zeitanteiles erlaubt, der durch das Betrieben des Fahrzeuges mit einer bestimmten Geschwindigkeit bei Fahrt mit einem bestimmten Gang beschreibbar ist. Aus den ermittelten Betriebsdaten kann zusätzlich über die Ermittlung weiterer Parameter auf den Hauptanwendungsfall für den Referenzzeitraum t_{referenz} und/oder die Referenzstrecke s_{referenz} geschlossen werden. Im Zusammenhang der ermittelten Betriebsdaten, insbesondere der Geschwindigkeitsverteilung KG in den einzelnen Gangstufen GS über den Referenzzeitraum t_{referenz} oder die Referenzstrecke s_{referenz} wird eine Auswertung bezüglich des im Referenzzeitraum angefallenen Kraftstoffverbrauches vorgenommen. Die ermittelten Ist-Werte werden in der Auswerteinrichtung 9 ausgewertet und dementsprechend eine Auswertung des Geschwindigkeitskollektivs im Hinblick auf den Kraftstoffverbrauch und/oder die Fahreigenschaften, d. h. beispielsweise die Fahrdynamik, getroffen.
Ergibt die Auswertung, daß mit dem vorliegenden Schaltprogramm keine optimalen Verbrauchswerte oder Fahreigenschaften für den Anwendungsbereich erzielt werden können, wird eine Empfehlung zur Vornahme einer Änderung des Schaltprogrammes gegeben. Dies bedeutet im einzelnen die Feststellung, daß mit einem anderen Schaltprogramm eine optimalere Geschwindigkeitsverteilung in den einzelnen Gangstufen einzustellen wäre, wobei bezüglich der Auswahl des entsprechenden Schaltprogrammes an dieser Stelle noch keine Aussage getroffen werden muß. Die Auswahl des geeigneteren Schaltverfahrens erfolgt im Rahmen theoretischer Überlegungen manuell anhand einer Auswertmatrix oder wird beispielsweise über Simulation des Fahrbetriebes über den Referenzzeitraum und/oder die Referenzsstrecke mit anderem Schaltprogramm S_{Vn+1} für das Vorliegen analoger Betriebsdaten ermittelt. Dabei werden für die zur Verfügung stehenden theoretisch mögichen Schaltprogramme, welche bereits in der Steuervorrichtung 6 der Getriebebaueinheit 4 hinterlegt sein können, oder aber beispielsweise beim Getriebehersteller verfügbar sind, mit den im aktuellen Referenzzeitraum t_{referenz} ermittelten Daten die Schaltvorgänge simuliert und die sich daraus ergebenden Zeitanteile und Geschwindigkeitskollektive gebildet und ausgewertet. Entsprechend des Ergebnisses wird eine Änderung des Schaltprogrammes angestrebt. Möglich ist auch eine Auswertung manuell anhand einer Entscheidungsmatirx.

Die Betriebsdatenerfassung erfolgt am Fahrzeug. Die Auswertung kann dabei wie in Figur 1a verdeutlicht vollständig oder wenigstens teilweise in der Steuervorrichtung 6 des Fahrzeuges vorgenommen werden. Dazu umfaßt die Steuereinrichtung 7 entsprechende Erfassungs- Bildungs- und Auswerteinrichtungen. Diese sind hier mit 11.1- 11.n bezeichnet. Desweiteren ist in diesem Fall eine Simulationseinrichtung 12 erforderlich. Die Auswertung und Wahl eines neuen Schaltprogrammes erfolgt automatisch.

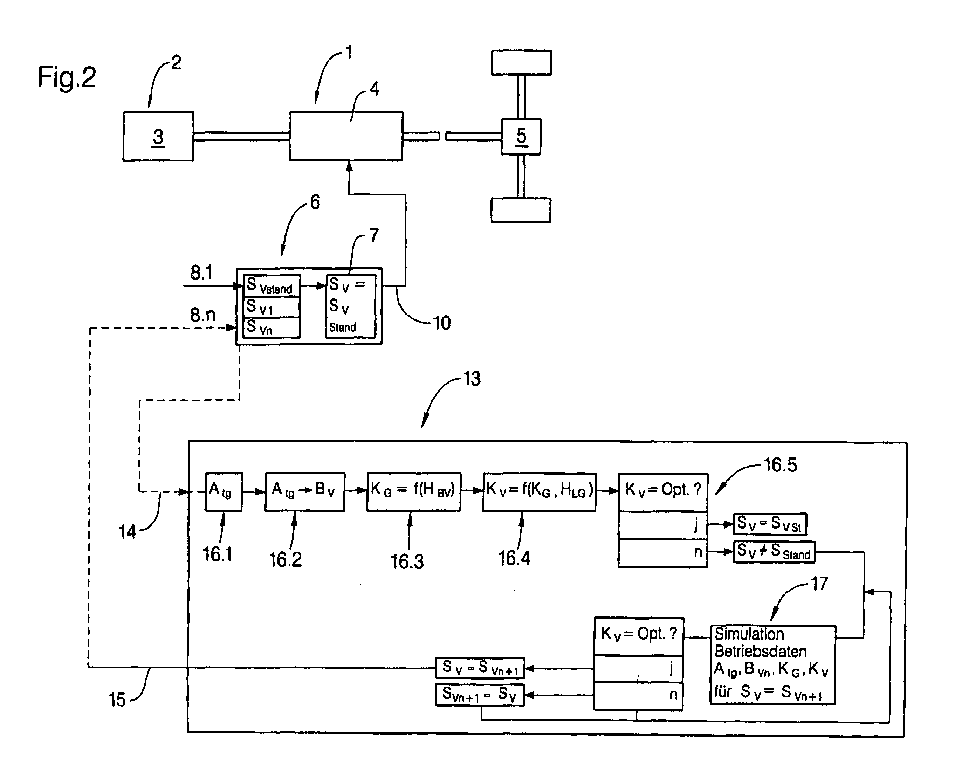

Eine weitere Möglichkeit ist in Figur 2 dargestellt. Hierbei erfolgt lediglich das Auslesen der Betriebsdaten aus der Steuereinrichtung 7 der Getriebebaueienheit. Die zur Auswertung erforderlichen Verfahrensschritte erfolgen extern, beispielsweise im Rahmen eines Kundendienstservices außerhalb des Fahrzeuges. Dazu ist eine entsprechende Erfassungs-und Auswertvorrichtung 13 vorgesehen. Diese umfaßt eine Erfassungs- und Auswerteinrichtung 18. Die Erfassungs- und Auswerteinrichtung 18 ist zum Auslesen der Betriebsdaten zur Auswertung der Nutzung eines bestimmten Schaltverfahrens während eines Referenzzeitraumes t_{referenz} für einen Hauptanwendungsbereich mit der Steuervorrichtung 6 der Getriebebaueinheit 4 verbindbar. Über wenigstens einen Eingang 14 werden dabei die Betriebsdaten eingelesen. Die Auswertung erfolgt über entsprechende Berechnungs- Zuordnungs- und Auswerteinheiten 16.1-16.n sowie eine Simulationseinrichtung 17 für den Fall, daß die Auswertung mit den Betriebsdaten bei unbefriedigendem Übertragungsverhalten für ein weiteres Schaltprogramm vorgenommen werden muß. Das Ergebnis wird am Ausgang 15 ausgegeben und enthält eine Empfehlung zur Beibehaltung oder Änderung des Schaltverfahrens. In einer weiteren, hier nicht dargestellten Ausführung können die Auswertvorrichtung 13 und die Auswerteinrichtung 18 im Steuergerät 7 integriert sein, wobei nur die Simulationseinrichtung bzw. die Zuordnung eines neuen Schaltprogrammes außerhalb der Steuereinrichtung 17 vorgenommen wird.

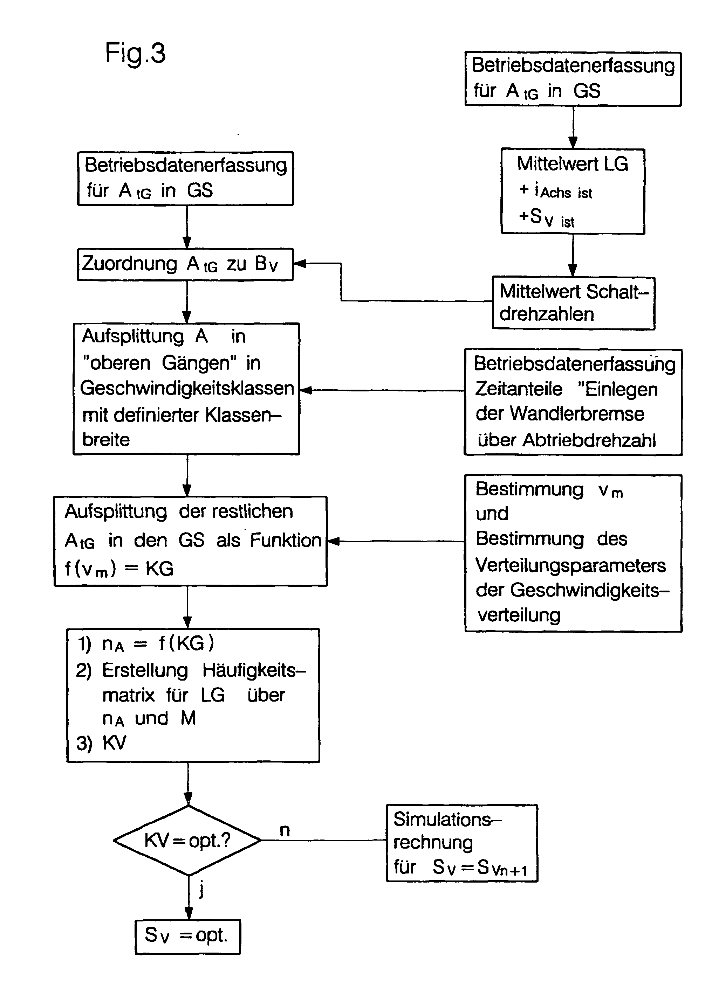

Vorzugsweise wird erstere Variante genutzt. Da jedoch die Beurteilungszeiträume in der Regel sehr lang bemessen werden, genügt eine externe Auswertung über den Kundendienstservice. Dazu werden nicht alle die Verweildauer in den einzelnen Gangstufen wenigstens mittelbar charakterisierenedn Größen fortlaufend gespeichert, sondern die Zeitanteile in den jeweiligen Gängen über einen bestimmten Referenzzeitraum oder eine Referenzstrecke ermittelt und die zur Bestimmung der Geschwindigkeitsbereiche erforderlichen Größen. Dieses Verfahren ist im Flußdiagramm gemäß Figur 3 wiedergegeben.

In einem ersten Schritt werden dabei die Zeitanteile A_{tg} in den jeweiligen Gangstufen GS ermittelt, das heißt die Zeitdauer der Nutzung der Gangstufen über einen bestimmten Referenzzeitraum t_{referenz} und/oder eine Referenzstrecke s_{referenz}.Unter einem weiteren Aspekt der Erfindung werden dabei die Zeitanteile A_{tg} in den Gängen zu Bereichen der Geschwindigkeit Bᵥ zugeordnet. Dazu ist es erforderlich, zusätzliche Betriebsdaten zu erfassen. Im einzelnen werden dabei in einem Schritt 2.1 die Zeitanteile A_{tLG} der Lastgeberstufen sowie in einem weiteren Schritt 2.2 ein Mittelwert für die Lastgeberstufen, das heißt der über den Referenzzeitraum beziehungsweise der Referenzstrecke eingestellte Wert der Lastgeberstellung, gebildet, die Achsübersetzung i_{Achs} sowie das gewählte Schaltprogramm Sᵥ und der in einem weiteren Schritt 2.3 aus den dem Schaltprogramm zugeordneten Schaltpunkten gebildete Mittelwert herangezogen werden. Dabei erfolgt in einem weiteren dritten Schritt das Aufsplitten der Zeitanteile A_{tg} in den oberen Gängen in entsprechende Geschwindigkeitsklassen KG mit einer bestimmten vordefinierbaren Klassenbreite. Die Klassenbreite entspricht dabei beispielsweise 5 bis 10 km pro Stunde, andere BEreiche sind ebenfalls denkbar. Dieses Aufsplitten der Zeitanteile erfolgt vorzugsweise mit Hilfe der Betriebsdatenerfassung, insbesondere die Erfassung der Zeitanteile des Einlegens der Wandlerbremse über der Abtriebsdrehzahl, das heißt der Ausgangsdrehzahl n. Die Zuordnung der restlichen Zeitanteile in den jeweiligen Gängen, insbesondere in den unteren Gängen erfolgt auf der Basis einer, aus einer mittleren Geschwindigkeit vₘ resultierenden Geschwindigkeitsverteilung. Die Bestimmung der mittleren Geschwindigkeit vₘ erfolgt dabei ebenfalls über den gesamten Referenzzeitraum t_{referenz} beziehungsweise die gesamte Referenzstrecke s_{referenz}. Aus dieser wird die Bestimmung des Verteilungsparameters der Geschwindigkeitsverteilung und damit das Geschwindigkeitskollektiv abgeleitet. Diese Geschwindigkeitsverteilung wird dabei als Charakteristikum für den Anwendungsfall angesehen. In einem weiteren fünften Schritt wird dann das Geschwindigkeitskollektiv im Hinblick auf den Kraftstoffverbrauch bewertet. Dies kann beispielsweise durch Übertragung auf die Motordrehzahl oder die Aufteilung anhand der Häufigkeit der Lastgeberstufen in Form einer Häufigkeitsmatrix über der Drehzahl und dem Drehmoment erfolgen. Entsprechend des Ergebnisses wird dann eine Empfehlung über die Eignung des momentan gentutzten Schaltprogrammes gegeben. D.h. es ist ersichtlich, ob das gewählte Schaltprogramm für den aktuellen Hauptanwendungsfall geeignet ist oder nicht. Dem entsprechend erfolgt eine Anpassung durch Auswahl eines geeigneteren Schaltprogrammes. Dieses ist in der Regel immer für eine bestimmte Lastgeberstellung und eine entsprechende Achsübersetzung i_{Achs} ausgelegt. Vorzugsweise finden beschleunigungsabhängige Schaltprogramme Verwendung. Diese sind beispielsweise aus den Druckschriften DE 195 16 948 A1 und DE 196 38 064 A1 bekannt. Dabei erfolgt das Umschalten zwischen den einzelnen aufeinanderfolgenden Gangstufen beschleunigungsabhängig. So wird je nach Erfordernis beziehungsweise Fahrwiderstand bei kleineren oder größeren Antriebs- beziehungsweise Motordrehzahlen geschaltet, je nachdem, ob niedriger Kraftstoffverbrauch oder eine ausreichende Beschleunigung zu bevorzugen ist. Für die Schaltung selbst ist die Beschleunigung des Fahrzeuges beziehungsweise dessen Verzögerung maßgeblich. Dabei werden immer die zwei folgenden Grenzfahrzustände beziehungsweise Beschleunigungen berücksichtigt:
1. Geringe Fahrzeugbelegung in ebenem oder abschüssigem Gelände = hohe Fahrzeugbeschleunigung.
2. Hohe Fahrzeugbelegung bei ansteigendem Gelände = geringe Fahrzeugbeschleunigung.

Im erstgenannten Fall ergibt sich eine hohe Fahrzeugbeschleunigung bei niedrigen Antriebsdrehzahlen. Eine Hochschaltung der Gänge kann daher bereits frühzeitig bei relativ niedriger Motordrehzahl erfolgen, was zu einer Senkung des Kraftstoffverbrauches führt. Aus dem gleichen Grund erfolgt auch die Rückschaltung der Gänge bei kleinerer Verzögerung mit niedrigerer Motordrehzahl. Im zweiten Fall ist eine größere Motorleistung erforderlich, weshalb die Hochschaltung erst bei einer relativ großen Motordrehzahl erfolgt. In Abhängigkeit von der gemessenen Fahrzeugbeschleunigung beziehungsweise Verzögerung erfolgt dabei die Hoch- oder Rückschaltung der einzelnen Gänge zwischen den beiden Fahrzuständen gleitend, das heißt in einem sogenannten Schalt-Drehzahlbereich. Unter diesem wird dabei der von den Grenzdrehzahlen gebildete Drehzahlbereich einer Gangstufe, von welcher aus die Umschaltung eingeleitet wird, bezeichnet. Der Schalt-Drehzahlbereich selbst ist außerdem von der Laststufe abhängig. Bei größerer Last wird demzufolge auch bei höherer Last geschaltet. Dies bedeutet, daß unterschiedlichen Laststufen auch unterschiedliche Schalt-Drehzahlbereiche zugeordnet werden. Dabei werden zwei Grundgedanken verwirklicht:
1. Die Vorgabe eines Schalt-Drehzahlbereiches derart, daß wenigstens eine Zieldrehzahl im Zielgang erreicht wird.
2. Bei Vorgabe wenigstens zweier Zieldrehzahlen - einer unteren und einer oberen Zieldrehzahl - ein abgestufter Kennlinienverlauf im Beschleunigungs-Abtriebsdrehzahl-Diagramm.

Im ersten Fall ist im Ausgangsgang ein Schalt-Drehzahlbereich vorgesehen, in welchem eine Umschaltung in den Zielgang derart erfolgt, daß bei Vorliegen einer Beschleunigungskomponente immer nur eine bestimmte Motorbeziehungsweise Antriebsdrehzahl, die sogenannte Zieldrehzahl erreicht wird. Diese ist jedoch nur für kleine Schalt-Drehzahlbereiche möglich. Diese Fallgestaltung ist somit nur eine Untervariante des Falles 2. Im zweiten Fall werden die beiden Grenzzustände - geringe Fahrzeugbelegung in ebenem oder abschüssigem Gelände und hohe Fahrzeugbelegung bei ansteigendem Gelände - berücksichtigt. Dies bedeutet, daß eine hohe Beschleunigung und eine geringe Beschleunigung vorgesehen werden. Bei hoher Beschleunigung wird der Umschaltvorgang bei geringeren Schaltdrehzahlen, das heißt früher als bei einem konventionellen Schaltprogramm mit festen Umschaltpunkten unter der Voraussetzung, daß gleiche Zieldrehzahlen im Zielgang erreicht werden sollen, eingeleitet. Ansonsten, das heißt bei Einleitung des Schaltvorganges bei gleicher Schaltdrehzahl, findet eine Verschiebung der erreichten Zieldrehzahl zu höheren Antriebs- beziehungsweise Motordrehzahlen hin statt. Bei geringer Beschleunigung und hoher erforderlicher Leistung erfolgt die Umschaltung in den nächst höheren Gang bei höheren Antriebs- beziehungsweise Motordrehzahlen, die jedoch kleiner sind als bei einem konventionellen Schaltverfahren im Hinblick auf die erreichte Zieldrehzahl. Die sich dabei einstellenden Zieldrehzahlen entsprechen vorzugsweise den konventionell erzielten Drehzahlen bei einem konventionellen Umschaltvorgang mit festen Umschaltpunkten ohne Berücksichtigung der Beschleunigung.

Die beiden Zieldrehzahlen charakterisieren einen sogenannten Ziel-Drehzahlbereich, in dem der Umschaltvorgang in Abhängigkeit von der Beschleunigung gleitend erfolgt. Im Beschleunigungs-/Abtriebsdrehzahl-Diagramm ergibt sich dabei eine abgestufte Kennlinie. Die Zieldrehzahlen und die zugehörigen Schaltdrehzahlen, unter welchen die vorliegende aktuelle Motordrehzahl in einem Gang verstanden wird, bei welcher die Umschaltung in den nächsthöheren oder nächstniederen Gang erfolgt, können von vornherein frei unter Berücksichtigung der kritischen Motordrehzahl im Ziel- und im Ausgangsgang in Abhängigkeit ob die Umschaltung in den nächsthöheren oder nächstniederen Gang erfolgt, festgelegt werden. Denkbar ist jedoch auch, als Ziehdrehzahlen die bei einem konventionellen Schaltvorgang mit festen Umschaltpunkten erzielten Zieldrehzahlen festzulegen.

Eine abgestufte Kennlinie ist jedoch auch mit nur einer unteren Zieldrehzahl und einer weiteren oberen erreichbaren Drehzahl im Zielgang realisierbar. Die obere erreichbare Drehzahl im Zielgang wird dabei nur bei Umschaltung bei einer Schaltdrehzahl erreicht, während die untere Zieldrehzahl bei Schaltvorgängen, die bei einer Vielzahl von unterschiedlichen Schaltdrehzahlen eingeleitet werden, erzielt wird.

Bei Vorsehen mehrerer Schaltprogramme werden diese in entsprechender Weise festgelegt. Dabei wird der gesamte theoretisch zur Verfügung stehende Schalt-Drehzahlbereich für Schaltvorgänge von einem ersten Ausgangsgang in den nächsthöheren oder in den nächstniederen Gang berücksichtigt. Dieser ergibt sich immer aus der untersten kritischen Motordrehzahl und der maximalen Motordrehzahl - den sogenannten Grenzdrehzahlen. Bei hoher positiver Beschleunigung erfolgt dabei unter Berücksichtigung der untersten kritischen Motordrehzahl, insbesondere der zu erzielenden Antriebsbeziehungsweise Motordrehzahl im Zielgang beim Hochschalten beziehungsweise bei hoher negativer Beschleunigung unter Berücksichtigung der Antriebs- und Motordrehzahl im Ausgangsgang beim Herunterschalten eine frühere Schaltung. Die Fahreigenschaften können unter Berücksichtigung von Gewicht, Achsübersetzung und Motormoment besser angepaßt werden. Bei niedrigerer Beschleunigung erfolgt die Umschaltung immer bei höheren Drehzahlen. Gegenüber konventionellen Fahrprogrammen mit festen Umschaltpunkten erfolgt das Hoch- oder Herunterschalten zwischen den Erfassungs-und Auswertvorrichtungeinzelnen Gangstufen bei fest vorgegebenen Schaltdrehzahlen. Im Abtriebsdrehzahl-/Antriebsdrehzahl-Diagramm bedeutet dies unterschiedliche Zieldrehzahlen je nach Fahrwidertand, das heißt je nach Beschleunigung während des Schaltvorganges. Im Extremfall erhält man eine Zieldrehzahl bei gleichbleibender Abtriebsdrehzahl um den Gangsprung dividiert, ansonsten höhere Zieldrehzahlen. In Abhängigkeit von der Beschleunigung des Fahrzeuges und der Last ist der Schaltbereich derart festgelegt, daß wenigstens eine Zieldrehzahl erreicht wird. Diese kann im Bereich der untersten kritischen Drehzahl im Zielgang liegen, darf diese jedoch nicht unterschreiten. Bei Berücksichtigung beider Grenzzustände ist der Schaltbereich derart festgelegt, daß immer eine Drehzahl zwischen beiden Zieldrehzahlen erreicht wird. Darüber hinaus besteht die Möglichkeit, das beschleunigungsabhängige Schaltverfahren noch zu variieren durch verbrauchsorientierte oder leistungsorientierte beschleunigungsabhängige Schaltverfahren. Während bei einfachen beschleunigungsabhängigen Schaltverfahren die Hoch- und Rückschaltungen gegenüber den anderen Programmen mit gesamtmöglichem Schalt-Drehzahlbereich eingeleitet werden, liegen die Schaltdrehzahlen bei einer verbrauchsorientierten beschleunigungsabhängigen Schaltversion aus Kraftstoffverbrauchsgründen bezogen auf den gesamten theoretisch möglichen Schalt-Drehzahlbereich verhältnismäßig niedrig. Der Schalt-Drehzahlbereich wird deshalb relativ klein eingestellt und ist zu geringen Antriebs- beziehungsweise Motordrehzahlen hin verschoben. Im Gegensatz dazu liegen dann die Schalt-Drehzahlen beim leistungsorientierten beschleunigungsabhängigen Schaltverfahren bezogen auf den gesamten theoretisch möglichen Schalt-Drehzahlbereich relativ hoch.

Die erfindungsgemäße Lösung ist nicht auf die Ausführung gemäß der Figuren 1 und 2 beziehungsweise die Betriebsdatenerfassung und Auswertung gemäß Figur 3 beschränkt. Denkbar ist auch eine fortlaufende Betriebsdatenerfassung und Speicherung in der Getriebebaueinheit. Die Auswertung und Auswahl des Schaltprogrammes kann dabei selbstlernend über die Steuervorrichtung erfolgen. Denkbar sind jedoch auch Anpassungen, die über das Service-Personal durch Auslesen der Daten vorgenommen werden. Dies hängt im einzelnen von der konkreten Ausgestaltung der Steuervorrichtung ab.

### Bezugszeichenliste

- 1: Antriebsstrang
- 2: Antriebsmaschine
- 3: Verbrennungskraftmaschine
- 4: Getriebebaueinheit
- 5: Achsgetriebebaueinheit
- 6: Steuervorrichtung
- 7: Steuereinrichtung
- 8, 8.1-8.n: Eingang
- 9: Auswerteinrichtung
- 10: Ausgang
- 10.1-10.n: Ausgang
- 11.1-11.n: Erfassungs- Bildungs- und Auswerteinrichtungen
- 12: Simulationseinrichtung
- 13: Erfassungs-und Auswertvorrichtung
- 14: Eingang
- 15: Ausgang
- 16: Berechnungs- Zuordnungs- und Auswerteinheiten
- 17: Simulationseinrichtung
- 18: Erfassungs-und Auswerteinrichtung
- t_{referenz}: Referenzzeit
- s_{referenz}: Referenzstrecke
- A_{tg}: Zeitanteil einer Gangstufe
- Bᵥ: Geschwindigkeitsbereiche
- KG: Geschwindigkeitskollektiv
- KV: Kraftstoffverbrauch
- S_{Vstandard}: Standardschaltprogramm
- LG: Lastgeberstufen

## Patentansprüche

1. Verfahren zur Optimierung des Getriebemanagements in einem Antriebsstrang für Fahrzeuge, umfassend eine Antriebsmaschine (2), eine mit dieser koppelbaren Getriebebaueinheit (4) zur Realisierung wenigstens zweier unterschiedlicher Gangstufen und ein zwischen Getriebebaueinheit und den anzutreibenden Rädern angeordnetes Achsgetriebe (5), wobei die Ansteuerung der Schaltelemente der Getriebebaueinheit zum Wechsel zwischen zwei Gangstufen unter Ausnutzung eines Schaltverfahrens zur Realisierung einer definierten Schaltkennlinie oder eines Schaltkennfeldes erfolgt, für einen überwiegend genutzten Betriebszyklus, **dadurch gekennzeichnet, daß** für die Schaltvorgänge nach einem bestimmten Schaltverfahren
1.1 der Zeitanteil der Nutzung einer jeden Gangstufe über einen Referenzzeitraum oder eine Referenzstrecke für ein Schaltverfahren ermittelt wird;
1.2 die Lastgeberstufen in den Zeitanteilen ermittelt werden;
1.3 die Zeitanteile in den Gangstufen Geschwindigkeitsbereichen zugeordnet werden und aus der Zuordnung ein Geschwindigkeitskollektiv für jede Gangstufe in Abhängigkeit der Häufigkeit der Geschwindigkeitsbereiche erstellt wird;
1.4 das Geschwindigkeitskollektiv hinsichtlich des erfolgten Kraftstoffverbrauches unter Berücksichtigung der Lastgeberstufen ausgewertet wird und
1.5 bei einem für den Betriebszyklus ungünstigen Kraftstoffverbrauch eine Empfehlung zur Änderung des Schaltprogrammes gegeben wird.

2. Verfahren nach Anspruch 1, **dadurch gekennzeichnet, daß** zur Ermittlung der Zeitanteile der Nutzung der einzelnen Gangstufen wenigstens eine, die eingelegte Gangstufe wenigstens mittelbar charakterisierende Größe und eine die Zeitdauer der Einlegung einer Gangstufe wenigstens mittelbar beschreibende Größe erfaßt werden.

3. Verfahren nach einem der Ansprüche 1 oder 2, **dadurch gekennzeichnet, daß** die Zuordnung der Zeitanteile in den Gangstufen zu Geschwindigkeitsbereichen durch nachfolgend genannte Verfahrensschritte charakterisierbar ist:
3.1 Festlegung der Geschwindigkeitsgrenzen für jede Gangstufe anhand des tatsächlich genutzten Schaltverfahrens;
3.2 Ermittlung der Schaltdrehzahlen der Antriebsmaschine anhand eines Lastgeberkollektives.

4. Verfahren nach Anspruch 3, **dadurch gekennzeichnet, daß** bei Vorliegen eines Schaltverfahrens mit variablen Schaltdrehzahlen jeweils ein Mittelwert für die Schaltdrehzahlen zum Wechsel zwischen zwei Gangstufen gebildet wird.

5. Verfahren nach Anspruch 4, **dadurch gekennzeichnet, daß** der Wechsel zwischen den Gangstufen beschleunigungsabhängig erfolgt und Zeitanteile für die Lastgeberstufen, ein Mittelwert für die Lastgeberstufen und Achsübersetzung ermittelt werden.

6. Verfahren nach einem der Ansprüche 1 bis 5, **dadurch gekennzeichnet, daß** zur Erstellung des Geschwindigkeitskollektives die Zeitanteile in den oberen Gangstufen in Geschwindigkeitsklassen einer bestimmten Klassenbreite unterteilt werden.

7. Verfahren nach Anspruch 6, **dadurch gekennzeichnet, daß** zur Erstellung des Geschwindigkeitskollektives die Zeitanteile in den oberen Gangstufen in Geschwindigkeitsklassen aus dem Bremsdatenkollektiv bestimmt werden.

8. Verfahren nach Anspruch 6, **dadurch gekennzeichnet, daß** die Aufsplittung der restlichen Zeitanteile in den jeweiligen Gängen auf der Basis einer sich aus der mittleren Geschwindigkeit ergebenden Geschwindigkeitsverteilung vorgenommen wird.

9. Verfahren nach Anspruch 1 bis 8, **dadurch gekennzeichnet, daß** zur Auswertung des Geschwindigkeitskollektives im Hinblick auf den Kraftstoffverbrauch aus dem Geschwindigkeitskollektiv die jeden einzelnen Geschwindigkeitsbereich einer Gangstufe charakterisierenden Antriebsdrehzahlbereiche und deren Häufigkeitsverteilung unter Berücksichtigung der Lastgeberstufen ermittelt werden und die sich daraus ergebenden Zeitanteile mit dem jeweils spezifischen Verbrauch der einzelnen Drehzahl-/Drehmomentbereiche multipliziert werden.

10. Verfahren nach einem der Ansprüche 1 bis 9, **dadurch** gekennzeichent, daß die Betriebsdaten von der Steuervorrichtung der Getriebebaueinheit oder einer dieser übergeordneten Steuervorrichung erfaßt werden.

11. Verfahren nach einem der Ansprüche 1 bis 10, **dadurch gekennzeichnet, daß** die Betriebsdaten in der Steuervorrichtung der Getriebebaueinheit und/oder einer dieser übergeordneten oder nebengeordneten Steuervorrichtung verarbeitet und ausgewertet werden.

12. Verfahren nach Anspruch 11, **dadurch gekennzeichnet, daß** eine Empfehlung während des Fahrbetriebes erfolgt.

13. Verfahren nach Anspruch 11, **dadurch gekennzeichnet, daß** die Empfehlung das Aktivieren eines anderen Schaltprogrammes in der Getriebesteuervorrichtung zur Folge hat.

14. Verfahren nach Anspruch 11 oder 12, **dadurch** gekennzeichent, daß während des Fahrbetriebes aufgrund einer Empfehlung zur Änderung wenigstens eine Simulation mit den Betriebsdaten für ein anderes Schaltprogramm erfolgt und das Schaltprogramm mit dem besten Resultat automatisch aktiviert wird.

15. Verfahren nach einem der Ansprüche 11 oder 13, **dadurch gekennzeichnet, daß** während des Fahrbetriebes aufgrund einer Empfehlung zur Änderung wenigstens eine Simulation mit den Betriebsdaten für ein anderes Schaltprogramm erfolgt und die Ergebnisse der Simulation oder Simulationen an eine externe Einrichtung zur Auswahl des geeigneten Schaltprogrammes übertragen werden.

16. Verfahren nach einem der Ansprüche 1 bis 10, **dadurch gekennzeichnet, daß** die bei einem Schaltprogramm für einen Referenzzeitraum und einen bestimmten Anwendungsfall sich ergebenden Betriebsdaten in der Steuervorrichtung der Getriebebaueinheit oder einer anderen Steuervorrichtung im Fahrzeug gespeichert werden und zu einem späteren Zeitpunkt extern auslesbar sind, wobei eine Auswertung extern vorgenommen wird.

17. Verfahren nach einem der Ansprüche 1 bis 16, **dadurch gekennzeichnet, daß** die Referenzzeit oder Referenzstrecke frei wählbar sind.

18. Verfahren nach einem der Ansprüche 1 bis 17, **dadurch gekennzeichnet, daß** die Referenzzeit oder Referenzstrecke fest vorgegeben sind.

## Claims

1. Method for optimising the driveline management of vehicles, comprising a drive machine (2), a gear unit (4) which can be coupled therewith for operating at least two different gears, and an axle gear (5) arranged between the gear unit and the wheels to be driven, wherein the shift elements of the gear unit for changing between two gears are driven using a shift method to achieve a defined shift characteristic curve or shift characteristic diagram, for a predominantly used working cycle, **characterised in that** for the shift procedures according to a specific shift method:
1.1 the time component taken to use each gear is established over a reference time period or reference distance for a shift method;
1.2 the load transmitter stages in the time components are established;
1.3 the time components in the gears are allocated speed ranges and from the allocation a speed collective for each gear is determined depending on the frequency of the speed ranges;
1.4 the speed collective is evaluated with respect to the resulting fuel consumption taking into consideration the load transmitter stages and
1.5 if fuel consumption is unfavourable for the working cycle a change in the shift program is recommended.

2. Method according to claim 1, **characterised in that** to determine the time components for the use of the individual gears at least one variable characterising at least indirectly the inserted gear and one variable describing at least indirectly the length of time a gear is inserted are established.

3. Method according to one of claims 1 or 2, **characterised in that** the allocation of the time components in the gears to speed ranges can be **characterised by** the following method steps:
3.1 determining the speed limits for each gear with reference to the shifting method actually used;
3.2 establishing the shift speeds of the drive machine with reference to a load transmitter collective.

4. Method according to claim 3, **characterised in that** if there is a shifting method with variable shift speeds an average value for the shift speeds is formed for the change between two gears.

5. Method according to claim 4, **characterised in that** the change between the gears is dependent on the acceleration and time components are determined for the load transmitter stages, an average value for the load transmitter stages and the axle translation.

6. Method according to one of claims 1 to 5, **characterised in that** to establish the speed collective the time components in the upper gears are divided into speed classes of a specific class band.

7. Method according to claim 6, **characterised in that** to establish the speed collective the time componenents in the upper gears are defined in speed classes from the brake data collective.

8. Method according to claim 6, **characterised in that** the splitting up of the remaining time components in the respective gears is carried out on the basis of a speed division resulting from the average speed.

9. Method according to claims 1 to 8, **characterised in that** to evaluate the speed collective with respect to fuel consumption from the speed collective the drive speed ranges characterising each individual speed range of a gear and their frequency distribution are established taking into account the load transmitter stages and the time components resulting therefrom are multiplied by the specific consumption of the individual speed/torque ranges.

10. Method according to one of claims 1 to 9, **characterised in that** the operating data is determined by the control device of the gear unit or a control device superordinate thereto.

11. Method according to one of claims 1 to 10, **characterised in that** the operating data in the control device of the gear unit and/or a control device arranged above or adjacent thereto are processed and evaluated.

12. Method according to claim 11, **characterised in that** a recommendation is made during the driving operation.

13. Method according to claim 11, **characterised in that** the recommendation results in the activation of a different shift program in the gear control device.

14. Method according to claim 11 or 12, **characterised in that** during the driving operation, on the basis of a recommendation to change, at least one simulation is performed with the operating data for a different shift program and the shift program with the best result is activated automatically.

15. Method according to one of claims 11 or 13, **characterised in that** during the driving operation on the basis of a recommendation to change, at least one simulation is performed with the operating data for a different shift program, and the results of the simulation or simulations are transferred to an external device for selecting the suitable shift program.

16. Method according to one of claims 1 to 10, **characterised in that** the operating data produced in a shift program for a reference time period and a specific application are stored in the control device of the gear unit or a different control device in the vehicle and can be read out externally at a later time, whereby an evaluation is carried out externally.

17. Method according to one of claims 1 to 16, **characterised in that** the reference time or reference distance can be selected freely.

18. Method according to one of claims 1 to 17, **characterised in that** the reference time or reference distance are fixed in advance.

## Revendications

1. Procédé d'optimisation de la gestion de la boîte de vitesses dans un groupe motopropulseur de véhicule, comprenant un moteur d'entraînement (2), une unité modulaire de boîte de vitesses (4) pouvant être couplée à celui-ci pour réaliser au moins deux rapports différents et un pont réducteur d'essieu (5) disposé entre l'unité modulaire de boîte de vitesses et les roues à entraîner, les éléments de changement de vitesse de l'unité modulaire de boîte de vitesses étant excités pour passer d'un rapport à un autre en utilisant un procédé de changement de vitesse ayant une courbe caractéristique de changement de vitesse ou un champ caractéristique de changement de vitesse définis, pour un cycle de service pour l'essentiel utilisé, **caractérisé en ce que** dans les changements de vitesse effectués selon un procédé de changement de vitesse déterminé :
1.1 la portion de temps d'utilisation d'un rapport est calculée, pour un procédé de changement de vitesse, au moyen d'un intervalle de temps de référence ou d'un segment de référence ;
1.2 les niveaux de détection de charge sont calculés pour les portions de temps ;
1.3 les portions de temps des rapports sont associées à des plages de vitesses et un ensemble de vitesses est déterminé pour chaque rapport à partir de l'affectation en fonction de la fréquence des plages de vitesses ;
1.4 l'ensemble des vitesses est évalué par rapport à la consommation effective de carburant en tenant compte des niveaux de détection de charge ; et
1.5 dans le cas d'une consommation de carburant non favorable du cycle de service, une recommandation de changement de programme de changement de vitesse est envoyée.

2. Procédé selon la revendication 1, **caractérisé en ce que** pour déterminer les portions de temps d'utilisation des différents rapports, au moins une grandeur au moins directement représentative du rapport engagé et une grandeur au moins directement représentative d'une durée d'engagement d'un rapport sont détectées.

3. Procédé selon l'une quelconque des revendications 1 ou 2, **caractérisé en ce que** l'affectation des portions de temps des rapports par rapport aux plages de vitesses peut être **caractérisée par** les étapes de procédé suivantes :
3.1 détermination des limites de vitesse pour chaque rapport à l'aide du procédé de changement de vitesse effectivement utilisé ;
3.2 calcul des nombres de tours du moteur d'entraînement correspondant aux changements de vitesse effectués à l'aide d'un ensemble de détecteurs de charge.

4. Procédé selon la revendication 3, **caractérisé en ce qu'**en cas de procédé de changement de vitesse à nombres de tours de changement de vitesse variables, une valeur moyenne du nombre de tours correspondant aux changements de vitesse pour passer d'un rapport à un autre est élaborée.

5. Procédé selon la revendication 4, **caractérisé en ce que** le passage d'un rapport à un autre se fait en fonction de l'accélération, que les portions de temps sont calculées pour les niveaux de détection de charge et qu'une valeur moyenne est calculée pour les niveaux de détection de charge et pour la démultiplication de l'essieu.

6. Procédé selon l'une quelconque des revendications 1 à 5, **caractérisé en ce que** pour déterminer l'ensemble des vitesses, les portions de temps sont divisées dans les rapports supérieurs en catégories de vitesses d'une taille de catégorie déterminée.

7. Procédé selon la revendication 6, **caractérisé en ce que** pour déterminer l'ensemble des vitesses, les portions de temps sont déterminées dans les rapports supérieurs en catégories de vitesses à partir de l'ensemble des données de freinage.

8. Procédé selon la revendication 6, **caractérisé en ce que** la division des portions de temps restantes des vitesses respectives se fait sur la base d'une répartition de la vitesse découlant de la vitesse moyenne.

9. Procédé selon l'une quelconque des revendications 1 à 8, **caractérisé en ce que** pour évaluer l'ensemble des vitesses par rapport à la consommation de carburant, on détermine à partir de l'ensemble des vitesses, les différentes plages de vitesses d'une plage de nombres de tours d'entraînement caractérisant un rapport et de sa fréquence dans le temps en tenant compte des niveaux de détection de charge et les portions de temps résultantes sont multipliées par la consommation spécifique des différentes plages de nombres de tours/de couple.

10. Procédé selon l'une quelconque des revendications 1 à 9, **caractérisé en ce que** les données de service sont détectées par le dispositif de commande de l'unité modulaire de boîte de vitesses ou d'un dispositif de commande prioritaire.

11. Procédé selon l'une quelconque des revendications 1 à 10, **caractérisé en ce que** les données de service sont traitées et analysées dans le dispositif de commande de l'unité modulaire de boîte de vitesses et/ou d'un dispositif de commande prioritaire ou de même niveau.

12. Procédé selon la revendication 11, **caractérisé en ce qu'**une recommandation est émise en situation de conduite.

13. Procédé selon la revendication 11, **caractérisé en ce que** la recommandation a pour conséquence l'activation d'un autre programme de changement de vitesse dans le dispositif de commande de la boîte de vitesses.

14. Procédé selon la revendication 11 ou 12, **caractérisé en ce qu'**en situation de conduite, au moins une simulation est réalisée avec les données de service d'un autre programme de changement de vitesse sur la base de la recommandation de changement et que le programme de changement de vitesse présentant le meilleur résultat est activé automatiquement.

15. Procédé selon l'une quelconque des revendications 11 ou 13, **caractérisé en ce qu'**en situation de conduite, au moins une simulation est réalisée avec les données de service d'un autre programme de changement de vitesse sur la base de la recommandation de changement et que les résultats de la simulation ou des simulations sont transmis à un dispositif externe en vue de sélectionner le programme de changement de vitesse approprié.

16. Procédé selon l'une quelconque des revendications 1 à 10, **caractérisé en ce que** les données de service découlant, dans un programme de changement de vitesse, d'un intervalle de temps de référence et d'un cas d'utilisation déterminé, sont enregistrées dans le dispositif de commande de l'unité modulaire de boîte de vitesses ou d'un autre dispositif de commande du véhicule et qu'elles peuvent être lues ultérieurement depuis l'extérieur, une évaluation étant alors effectuée depuis l'extérieur.

17. Procédé selon l'une quelconque des revendications 1 à 16, **caractérisé en ce que** la durée de référence ou le segment de référence peuvent être choisis librement.

18. Procédé selon l'une quelconque des revendications 1 à 17, **caractérisé en ce que** la durée de référence et le segment de référence sont fixés au préalable.
